Europäisches Patentamt

European Patent Office

Office européen des brevets

(11) Veröffentlichungsnummer : **0 147 564**
**B1**

(12) **EUROPÄISCHE PATENTSCHRIFT**

(45) Veröffentlichungstag der Patentschrift :
20.01.88

(21) Anmeldenummer : 84112906.7

(22) Anmeldetag : 26.10.84

(51) Int. Cl.⁴ : **D 21 B   1/32**, D 21 D   5/04,
**D 21 C   9/06**

(54) **Anordnung zur Aufbereitung von Altpapier.**

(30) Priorität : 16.12.83 DE 3345548

(43) Veröffentlichungstag der Anmeldung :
**10.07.85 Patentblatt 85/28**

(45) Bekanntmachung des Hinweises auf die Patenterteilung : **20.01.88 Patentblatt 88/03**

(84) Benannte Vertragsstaaten :
**AT BE CH FR GB IT LI NL SE**

(56) Entgegenhaltungen :
**EP-A- 0 120 766**
**FR-A- 2 529 593**
**GB-A- 2 061 343**

(73) Patentinhaber : **J.M. Voith GmbH**
**Postfach 1940 St. Pöltener Strasse 43**
**D-7920 Heidenheim (DE)**

(72) Erfinder : **Musselmann, Walter**
**Franz Marc-Strasse 32**
**D-7920 Heidenheim (DE)**
Erfinder : **Konecsny, Helmut**
**Hölzlesweg 19**
**D-7928 Giengen 6 (DE)**

## Beschreibung

Die Erfindung betrifft eine Anordnung zur Aufbereitung von Altpapier entsprechend dem Oberbegriff des Patentanspruchs 1.

Eine solche Einrichtung ist bekanntgeworden durch DE-OS 25 14 162. Mit dieser Anordnung wird die aus dem Sekundärstofflöser abgezogene Fraktion, die mit dem Schwerschmutz angereichert ist, in einen Hydrozyklon geleitet, wonach der daraus abgeführte Gutstoff wieder zurück in den Primärstofflöser geleitet wird.

Andererseits wird bei einer ähnlichen, aus der DE-C 27 59 113 oder DE-A 29 49 029 bekannten Anordnung sowohl die mit dem Leichtstoff angereicherte, als auch die mit dem Schwerschmutz angereicherte, über den Hydrozyklon geführte und aus dem Sekundärstofflöser abgeführte Fraktion mehreren Reinigungsstufen unterworfen, wobei zwischendurch erzeugter Gutstoff einer Gutstoffsammelbütte zugeführt und schließlich ein mit erheblichen Schmutzanteilen durchsetzter Restanteil wieder in den Primärstofflöser zurückgeführt wird. Man erkennt aus der letztgenannten Anlage, daß diese bisher sehr aufwendig aufgebaut worden sind, um die nötigen Verarbeitungsschritte durchzuführen, bis man einigermaßen den Gutstoff von den Verschmutzungen befreit hatte und einen Restanteil an Fasersuspension erhielt, der relativ stark verschmutzt wieder in dem Stofflöser 1 aufbereitet wurde.

Die Aufgabe der Erfindung ist es demgegenüber, eine solche Anlage sehr stark zu vereinfachen und demgemäß billiger auszuführen und dabei die Sortierung bis zur Endstufensortierung mit Spuckstoffabscheidung durchzuführen.

Diese Aufgabe wird bei einer Einrichtung der eingangs genannten Art durch die kennzeichnenden Merkmale des Patentanspruchs 1 gelöst.

Dabei ist es besonders vorteilhaft, den Umwälzraum des Waschfilters als flachen, scheibenförmigen Zylinder auszubilden.

Man erreicht dadurch wesentlich weniger und dazu auch weniger aufwendige Reinigungsstufen.

Nachfolgend wird die Erfindung anhand eines in der Zeichnung dargestellten Ausführungsbeispiels erläutert, wobei Fig. 1 und 2 prinzipiell erfindungsgemäße Anlagen und Fig. 3 eine Ansicht des Waschfilters zu der Erfindung zeigt.

Dem Primärstofflöser 1 ist bei dieser Anlage ein Sekundärstofflöser 2 nachgeschaltet, der einen zentralen Auslaßstutzen 3 aufweist, aus welchem eine mit Leichtschmutz angereicherte Fraktion abgezogen wird. Die aus diesem Stutzen abgezogene Fraktion wird einem Waschfilter 4 zugeführt. Dieses weist einen zentralen Umwälzraum 5 auf, der von einem Gutstoffraum 6 durch ein Sieb 8 getrennt ist, vor welchem koaxial zu dem Umwälzraum ein Umwälzlaufrad 7 rotiert. Dabei ist dem Umwälzraum 5 ein zu diesem koaxial liegender Eintrittsraum 9 vorgeschaltet, an den die vom Sekundärstofflöser 2 kommende Stoffleitung 18 sowie eine Waschwasserleitung 19 angeschlossen sind. Dabei ist die Leitung 18 tangential und sen Leitung 19 stirnseitig zentral in den Eintrittsraum 9 geführt. Das Gehäuse des Sekundärstofflösers 2 hat eine im wesentlichen rotationssymmetrische Grundform. Auch hierbei ist ein Gutstoffraum 10 von dem Umwälzraum 13 durch ein Sieb 11 abgetrennt, vor dem ein Umwälzlaufrad 12 im Umwälzraum 13 koaxial mit diesem rotierbar gelagert ist. Über das Sieb 11 abgeschiedener Gutstoff wird über Leitung 14 einem Gutstoffsammelbehälter 15 zugeführt.

Gleichfalls wird der Gutstoff aus dem Gutstoffraum 6 des Waschfilters 4 über Leitung 16 diesem Sammelbehälter zugeführt. Ferner führt eine Stoffleitung 20 aus dem Umwälzraum 5 des Waschfilters 4 heraus. Das Umwälzlaufrad 12 erzeugt in dem Umwälzraum 13 des Sekundärstofflösers 2 eine Wirbelströmung, welche dazu führt, daß an seiner Peripherie eine mit Schwerschmutz angereicherte Fraktion und aus seinem zentralen Bereich eine mit Leichtschmutz angereicherte Fraktion über den genannten Leichtstoffabzugsstutzen 3 abgezogen werden kann. Dazu ist in der Leitung 18, die zu dem Waschfilter 4 führt, noch ein automatisch betätigbares Ventil oder Schieber 21 vorgesehen, das periodisch geöffnet werden kann, um die entsprechende Fraktion dem Waschfilter 4 zuzuführen.

In dem Primärstofflöser 1 wird ebenfalls die Gutstofffraktion in dem Gutstoffraum 22 nach Siebung mittels des Siebes 26 mit Unterstützung des Rotors 25 gebildet.

Schwerschmutz wird in üblicher Weise dort durch die Schwerschmutzschleuse 27 abgeführt. Ferner ist an dem Primärstofflöser 1 noch eine Zopfabzugsleitung 28, die zu einer Zopfwinde führt, angeschlossen. An diese Zopfabzugsleitung ist wiederum eine Leitung 29 herangeführt, über die Fasersuspension einem Abzugsapparat 30 zugeführt wird, in dessen Abzugsraum ein Aufschlagrad 31 vorgesehen ist, das zur weiteren Auflösung von Papierfetzen dient. Dazu kann das in der an dem Abzugsapparat 30 angeschlossenen Abzugsleitung 32 eingeschaltete Ventil 33 eine Weile geschlossen bleiben, um in der Zwischenzeit eine Auflösung der Papierfetzen zu bewirken. Die Leitung 32 ist dann zu einer um eine horizontale Achse rotierbaren Sortiertrommel 34 geführt, aus welcher nicht sortierbarer Schmutz stirnseitig über die Öffnung 35 abgezogen wird. Der sortierbare, nicht mehr so stark verschmutzte Gutstoff gelangt durch die Perforation der Sortiertrommel 34 in den Sammelbehälter 38 und wird über Leitung 39 zweckmäßig wieder dem Primärstofflöser 1 zugeführt.

Ebenso kann die aus dem Sekundärstofflöser 2 über Leitung 41 den dort angeschlossenen Hydrozyklon 40 abgezogene mit Schwerschmutz angereicherte Suspension wieder über Leitung 42 dem Primärstofflöser 1 zugeführt werden. Es ist allerdings auch möglich, diese Gutstofffraktion des Hydrozyklons 40 über Leitung 44 wieder in den Bereich des Leichtstoffabzugsstutzens 3 des Sekundärstofflösers 2 und in dessen Umwälzraum 13 zurückzuführen.

In die aus dem Umwälzraum 5 des Waschfilters 4 führende Stoffleitung 20 ist ebenfalls ein automatisch zu betätigendes Ventil 45 eingeschaltet. Ferner weist die aus dem Gutstoffraum 6 des Waschfilters 4 führende Gutstoffleitung eine Verzweigungsleitung 47 auf, in die ebenfalls ein automatisch betätigbares Ventil 46 eingeschaltet ist. Auch die Gutstoffabzugsleitung 16 weist ein automatisch betätigbares Ventil 48 auf. Entsprechendes gilt für die Waschwasserleitung 19, wozu dort das Ventil 49 vorgesehen ist.

Man kann nun nach Öffnung des Ventils 21 die Ventile 45 und 46 geschlossen lassen, um den in dem Waschfilter abgeschiedenen Gutstoff aus dem Gutstoffraum 6 dem Gutstoffsammelbehälter 15 zunächst zuzuführen (Phase I). Erst nachdem sich eine größere Menge Schmutz in dem Umwälzraum 5 des Waschfilters angesammelt hat, wird man Ventil 48 schließen und dafür Ventil 46 und Ventil 49 in der Waschwasserleitung öffnen. (Man kann natürlich auch Ventil 49 etwas eher öffnen und so noch eine gewisse Zeit verwertbare Fasersuspension, die noch nicht so stark verdünnt ist, der Gutstoffsammelbütte 15 zuführen — Phase IIa.) Dadurch wird eine weitere Durchspülung und Auflockerung der in dem Umwälzraum 5 befindlichen Fasersuspension erreicht, wodurch eine weitere Sortierung derselben über das Sieb 8 möglich wird (Phase II bzw. IIb). Man führt dann in dieser Zeitspanne erzeugten Gutstoff über Leitung 20 in die um eine horizontale Achse rotierbare Sortiertrommel 36 mit perforiertem Mantel. Dort wird ebenfalls wie bezüglich des Teils 34 der nicht sortierbare Anteil über die stirnseitige Öffnung 37 ausgeschieden, während der sortierbare Gutstoff, der relativ wenig verschmutzt ist, durch die Perforation gelangt und in den Sammelbehälter 38 abgeführt wird. In dem Ausführungsbeispiel sind die beiden Trommelteile 34 und 36 zu einer Einheit zusammengefaßt und durch eine Trennwand voneinander getrennt. Die Zuführung der Suspension erfolgt dabei durch die Leitungen 32 und 20 in die Nähe der Trennwand, wie dargestellt.

Sobald über Leitung 19 bei geöffnetem Ventil 49 Waschwasser in das Waschfilter geführt wird, ist am besten das Ventil 21 in Leitung 18 zu schließen. Nachdem Leitung 47 mittels Ventil 46 eine Weile geöffnet war, wird Leitung 47 ebenfalls wieder geschlossen und Ventil 45 geöffnet. Bei geöffnetem Ventil 49 spült dann das Waschwasser mit Hilfe des Umwälzlaufrades 7 den Restanteil, der insbesondere aus Schmutzanteilen besteht und nur noch verhältnismäßig wenig Fasern enthält, aus dem Umwälzraum 5 über Leitung 20 hinaus (Phase III). Eine noch verwertbare Faseranteile enthaltende Fraktion wird dann ebenfalls durch den Trommelteil 36 wiedergewonnen, um in den Primärstofflöser 1 weiter aufgearbeitet zu werden.

Es ist mit 50 noch eine Pumpe bezeichnet, die den Gutstoff über Leitung 51 aus dem Gutstoffsammelbehälter 15 abführt.

Bei geringem Schwerschmutzanteil kann auch die Schwerschmutzabzugsleitung des Sekundärstofflösers 2, mit 52 gestrichelt dargestellt, an das Waschfilter 4 angeschlossen und so Hydrozyklon 40 eingespart werden. Man erhält so eine zusätzliche Abführphase Ib, also vor den Phasen II bzw. IIa und IIb liegende Phase, während der das Absperrorgan 53 in Leitung 52 geöffnet ist.

Es ist aber durchaus möglich, den Trommelteil 36 durch einen Eindicker zu ersetzen und den praktisch kaum noch verwertbaren Faseranteil enthaltenden Stoff der Phasen III (und eventuell IIb) nach Eindickung zu verwerfen und das Eindickerwasser als Verdünnungswasser für den Stofflöser zu verwenden.

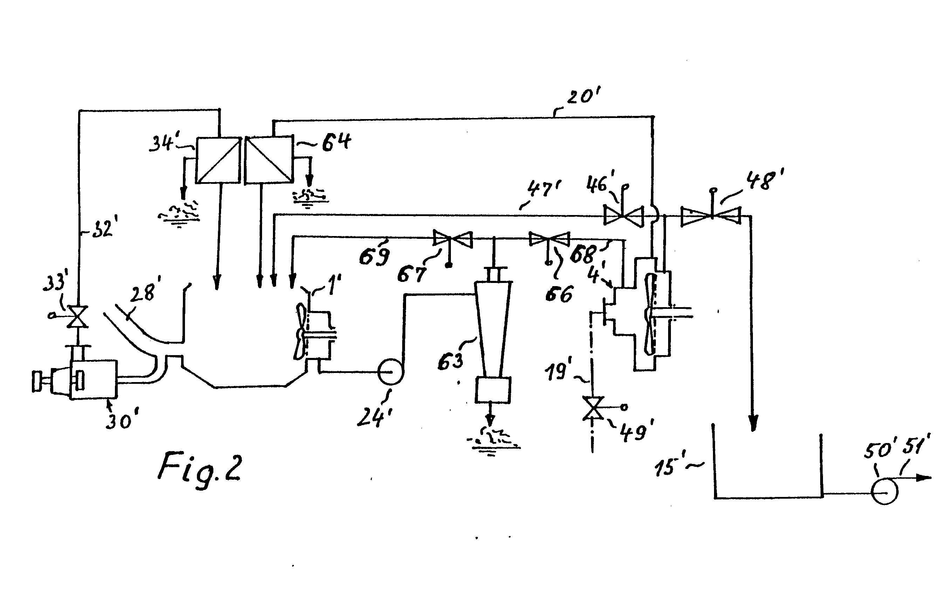

Wie gesagt, weist das Waschfilter 4 einen Umwälzraum 5 und einen diesem vorgeschalteten Eintrittsraum 9 auf. Dabei ist der Durchmesser des Eintrittsraumes 9 wesentlich kleiner als der des Umwälzraumes 5 (etwa 30-60 % desselben) und der Umwälzraum ist als ein gedrungener, scheibenförmiger Zylinder ausgeführt (siehe Fig. 2). Bei einer Breite b desselben von ca. 30 cm liegt das Verhältnis von dessen Breite zu seinem Durchmesser D b/D zwischen 0,15 und 0,35. Für einen günstigen Wascheffekt wurde ein Verhältnis zwischen 0,2 und 0,3 als am geeignetsten gefunden. Dadurch ergibt sich eine große Siebfläche 8 bei relativ kleinem Volumen des Umwälzraumes 5. Dieses beträgt etwa nur 20 bis 50 % des Volumens des Umwälzraumes 13 des Sekundärstofflösers 2. Durch die Anordnung des vorgeschalteten Eintrittsraumes sowie den flachen, scheibenförmigen Umwälzraum wird eine gute Durchspülung mit dem Waschwasser einerseits und wegen der möglichen, großen Siebfläche eine große Durchsatzleistung erzielt. Bisherige, bekannte Waschfilter wären wegen der zu behandelnden, mit relativ groben Verschmutzungen durchsetzten Fasersuspension völlig unzureichend für diesen Zweck.

Die Lochdurchmesser des Siebes im Waschfilter 4 wählt man dabei am zweckmäßigsten zwischen 2 und 3 mm, während ja bekanntlich der Sieblochdurchmesser in dem Sekundärstofflöser etwa im allgemeinen zwischen 3 und 5 mm liegt. Die Sieblochdurchmesser in dem Trommelteil 34 liegen am besten zwischen 12 und 18 mm und im Trommelteil 36 zwischen 3 und 5 mm. Der Trommelteil 36 erhält deswegen die sehr viel feinere Lochung, weil ja auch viel feinere Verschmutzungen in der hier behandelten Fasersuspension enthalten sind. Führte man die beiden Trommelteile getrennt aus, so könnte man für jeden eine andere Antriebsdrehzahl vorsehen und jeweils den Trommeldurchmesser dem jeweiligen Bedarf anpassen.

Man kann ferner noch Entstippungsleisten auf dem Sieb 8 auf der Seite vorsehen, die dem Umwälzlaufrad zugewandt ist.

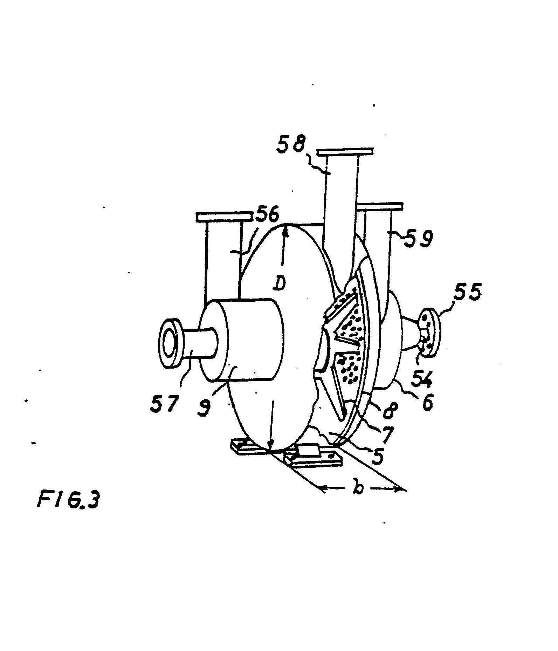

In Fig. 3 erkennt man, daß zweckmäßig die Leitungen, insbesondere die Eintrittsstutzen 56 und Austrittsstutzen 58 des Umwälzraumes, aber auch Austrittsstutzen 59 des Gutstoffraumes tangential angeordnet sind. Waschwasser-Anschlußstutzen 57 ist hingegen zentral am Eintrittsraum 9 vorgesehen. Der Antrieb des Rotors erfolgt durch Welle 54 über Kupplungsflansch 55.

Man hat bei der Erfindung den Hauptvorteil, daß man hinter dem Waschfilter Spuckstoff erhält (Phase III und eventuell IIb), der nur noch einen geringen Faseranteil enthält. Phasen II und III sind nämlich sehr kurz im Verhältnis zu Phase I (es gilt etwa des Verhältnis 1 : 10 bis 1 : 15), so daß der Stoff im Umwälzraum 5 des Waschfilters durch den Rotor und das Sieb sehr weitgehend entstippt wird. Deshalb kann man den Spuckstoff der genannten Phasen — wie oben beschrieben — einfach entwässern und dann verwerfen.

Man hat bei der erfindungsgemäßen Anordnung weiter den großen Vorteil, daß man sowohl hinter dem Sekundärstofflöser als auch hinter dem Waschfilter einen Gutstoff mit einer Konsistenz von etwa 4 % erhält, so daß eine Eindickung auch entfällt. Ferner sind auch die Investitionskosten insgesamt recht gering, da auch die Trommelteile mit der horizontalen Drehachse 34 und 36 wegen des praktisch kontinuierlichen Betriebs derselben relativ klein ausgeführt werden können. Es ist ein hoher Abscheideeffekt vorhanden, da mit hoher Verdünnung gearbeitet werden kann, da sowohl das Verdünnungswasser des Hydrozyklons 40 als auch des Waschfilters 4 zur Einstellung der Konsistenz im Primärstofflöser benutzt wird. Das gleiche gilt bezüglich der Trommelteile 34 und 36.

Ein weiterer Vorteil ist, daß man den störanfälligen Vibrationssortierer völlig vermeiden kann.

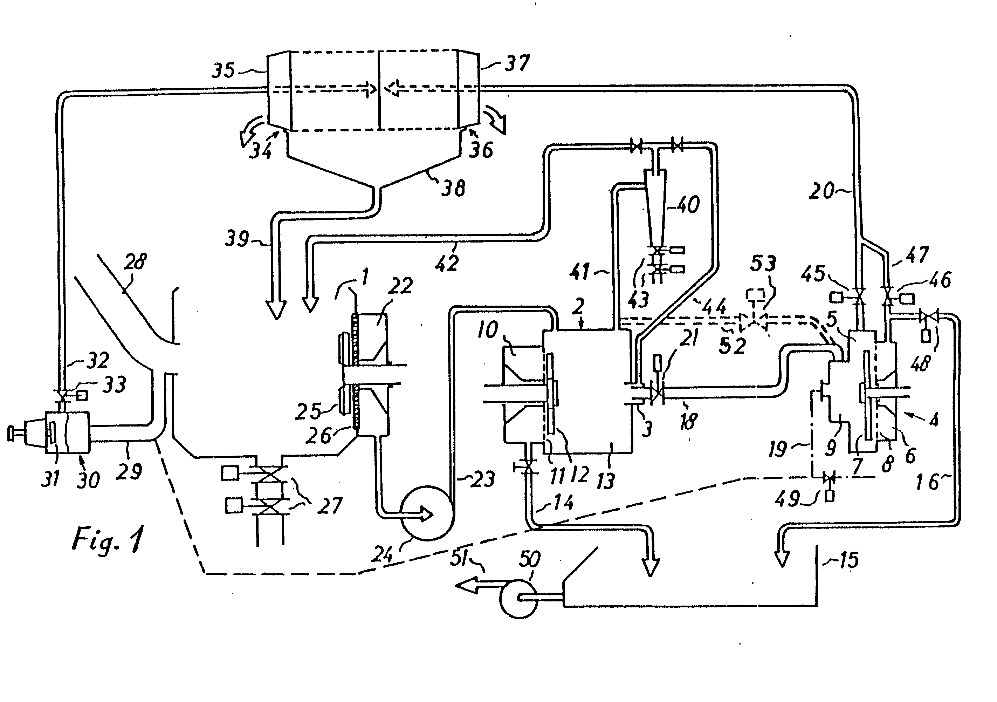

In Fig. 2 ist eine Anlage gemäß der Erfindung für kleinere Tagesproduktionen, und zwar für etwa höchstens 150 Tonnen je Tag skizziert. In dieser Figur sind die entsprechenden Aggregate, wie aus Figur 1 bekannt, jeweils mit dem gleichen Index, jedoch mit einem Strich versehen, gekennzeichnet.

Hier ist hervorzuheben, daß der Sekundärstofflöser 2 der Anlage nach Fig. 1 entfallen ist. Seine Aufgabe hat hier das Waschfilter 4' übernommen. Es ist hier auch dargestellt, daß die Gutstoffleitung 47 (d. h. hier 47') nicht zu einem getrennten Sortiergerät, sondern gleich direkt wieder in den Primärstofflöser 1' zurückgeführt wird. Das gleiche könnte bezüglich Leitung 47 auch in der Anlage gemäß Fig. 1 vorgenommen werden. Dabei ist während Phase I zunächst Ventil 48' geöffnet, um den Gutstoff der Gutstoffsammelbütte 15' zuzuführen. Nach Einsetzen des Waschvorganges, wenn Ventil 49' geöffnet ist, wird nach kurzer Zeit Ventil 48' geschlossen und Ventil 46' geöffnet. Der während der Phase III über Leitung 20' aus dem Waschfilter 4' abgezogene Spuckstoff wird auf das Eindickgerät 64 gegeben. Das Filtrat wird als Verdünnungswasser in den Primärstofflöser 1' eingeleitet.

Bei dieser Anlage ist zur Schwerteilabscheidung zwischen den Primärstofflöser 1' und das Waschfilter 4' ein als Dickstoffreiniger bekannter Hydrozyklon 63 eingeschaltet. Von diesem führt eine Leitung 68, in welcher das Ventil 66 eingeschaltet ist, zum Eintrittsraum des Waschfilters 4' und eine Leitung 69, in welche das Ventil 67 eingeschaltet ist, zum Primärstofflöser 1'. Dabei ist Ventil 66 überwiegend offen und wird nur dann geschlossen, wenn der Waschvorgang nach Öffnung des Ventils 49' in Leitung 19' einsetzt. Während dieser Zeit ist dann Ventil 67 offen und es wird die Suspension im Kreislauf zwischen dem Primärstofflöser 1' und dem Hydrozyklon 63 gefahren. Dadurch werden während dieser Zeit schwere Verunreinigungen, also insbesondere Metallteile, aus dem Aufbereitungsprozeß entfernt.

Man kann die Anlage noch weiter dadurch vereinfachen, daß man das an das Zopfabzugsrohr 28' des Primärstofflösers 1' angeschlossene Ausschleusgerät 30' wegläßt und statt dessen gemäß der in Fig. 1 gestrichelt gezeichneten Leitung die dort abgezogenen, mit Leichtschmutz verunreinigten Stoffmengen ebenfalls direkt in das Waschfilter 4' einleitet. Diese Maßnahme kann bei einer Anlage entsprechend Fig. 1 dann dort angewendet werden, wenn man auf kleinere Tagesproduktionen umstellen will. In diesem Fall wäre also das Waschfilter 4 zwei Mal im Nebenstrom angeschlossen, und zwar ein Mal an den vom Sekundärstofflöser 2 ausgehenden Nebenstrom und zweitens an den vom Primärstofflöser 1 abgehenden Nebenstrom angeschlossen, während im Fall von Fig. 2 das Waschfilter 4' praktisch im Hauptstrom über den Hydrozyklon 63 an den Primärstofflöser 1' angeschlossen ist. Für Tagesproduktionen von mehr als 400 Tonnen Altpapier pro Tag könnte man die Anlageteile 24 bis 4 einschließlich jeweils entsprechend Fig. 1 je nach Bedarf mehrfach parallelschalten und nach den Waschfiltern 4 dann jeweils die Stränge wieder zweckmäßig vereinigen.

## Patentansprüche

1. Anordnung zur Aufbereitung von Altpapier mit einem Primärstofflöser (1, 1'), einem Hydrozyklon (40, 63) und gegebenenfalls einem Sekundärstofflöser (2), der einen durch ein Sieb (11) von einem Gutstoffraum (10) getrennten Umwälzraum (13) aufweist, von dem stirnseitig, zentral eine Abzugsleitung (18) für eine mit Leichtschmutz angereicherte Fraktion und an dessen Umfang eine zur Abfuhr von mit Schwerschmutz angereicherter Fasersuspension dienende Leitung (41) abgeht, dadurch gekennzeichnet, daß ein Waschfilter (4, 4') vorgesehen ist, das einen als gedrungenen Zylinder ausgeführten Umwälzraum (5) und einen durch ein im wesentlichen ebenes Sieb (8), vor dem ein Umwälzlaufrad (7) im Umwälzraum (5) angebracht ist, vom Umwälzraum (5) getrennten Gutstoffraum (6) sowie einen Eintrittsraum (9) für Fasersuspension und Waschwasser aufweist, wobei der Eintrittsraum (9) einen wesentlich kleineren Durchmesser als der Umwälzraum (5) hat und einen Waschwasseranschluß (19, 19') aufweist, und daß der Eintrittsraum (9) des Waschfilters (4, 4') im Hauptstrom über einen Hydrozyklon (63) an den Primärstofflöser (1') oder im Nebenstrom an die Abzugsleitung (18) für die Leichtschmutzfraktion des dem Primärstofflöser nachgeschalteten Sekundärstofflösers (2) angeschlossen ist, und daß vom Umwälzraum (5) des Waschfilters (4) eine Spuckstoffabzugsleitung (20) abgeht, an die ein Eindickgerät (Trommelsortiergerät 36, 64) angeschlossen ist, dessen Filtratleitung zum Primärstofflöser (1, 1') geführt ist.

2. Anordnung nach Anspruch 1, dadurch gekennzeichnet, daß das Waschfilter (4, 4') mit seinem Eintrittsraum (9) jeweils zusätzlich im Nebenstrom direkt an den Primärstofflöser angeschlossen ist.

3. Anordnung nach Anspruch 1 oder 2, dadurch gekennzeichnet, daß das Umwälzlaufrad (7) des Waschfilters (4) koaxial zum Umwälzraum (5) und Eintrittsraum (9) angeordnet ist.

4. Anordnung nach einem der Ansprüche 1 bis 3, dadurch gekennzeichnet, daß der Durchmesser des Eintrittsraums (9) 40-70 % kleiner als der Durchmesser des Umwälzraums (5) des Waschfilters (4) ist.

5. Anordnung nach einem der Ansprüche 1 bis 4, dadurch gekennzeichnet, daß der Umwälzraum (5) des Waschfilters (4) wesentlich kleiner als der Umwälzraum (13) des Sekundärstofflösers (2) ist.

6. Anordnung nach einem der Ansprüche 1 bis 5, dadurch gekennzeichnet, daß der Umwälzraum (5) des Waschfilters (4) als kurzer, gedrungener Hohlzylinder ausgebildet ist, wobei das Verhältnis von seiner Breite b zu seinem Durchmesser D 0,15 bis 0,35 beträgt.

7. Anordnung nach einem der Ansprüche 1 bis 6, dadurch gekennzeichnet, daß eine der beiden Anschlußleitungen (14, 23) des Eintrittsraums (9) des Waschfilters (4) tangential und die andere zentral stirnseitig an diesen angeschlossen ist.

8. Anordnung nach einem der Ansprüche 1 bis 7, dadurch gekennzeichnet, daß die Abzugsleitung (52) für die aus dem Sekundärstofflöser (2) abgezogene, mit Schwerschmutz angereicherte Fraktion an den Eintrittsraum (8) des Waschfilters (4) angeschlossen ist.

## Claims

1. Arrangement for the preparation of waste paper with a primary pulper (1, 1'), a hydrocyclone (40, 63) and, if required, a secondary pulper (2), which has a circulating chamber (13) separated from an accepts chamber (10) by a screen (11), from which departs centrally at the end face, a discharge pipe (18) for a fraction enriched with light contaminants and at the periphery of which a pipe (41) serving for discharge of fibrous suspension enriched with heavy contaminants, characterized in that a washing filter (4, 4') is provided, which has a circulating chamber (5) designed as a compact cylinder and an accepts chamber (6) separated from the circulating chamber (5) by a substantially flat screen (8) ahead of which is fitted a circulating impeller (7) in the circulating chamber (5), with the inlet chamber (9) having a substantially smaller diameter than the circulating chamber (5) and a washing water connection (19, 19'), and that the inlet chamber (9) of the washing filter (4, 4') is connected in the main flow via a hydrocyclone (63) to the primary pulper (1') or, in the secondary flow, to the discharge pipe (18) for the light contaminants fraction of the secondary pulper (2) succeeding the primary pulper, and that a rejects pipe (20) departs from the circulating chamber (5) of the washing filter (4), to which a thickening unit (drum screen unit 36, 64) is connected, whose filtrate pipe is led to the primary pulper (1, 1').

2. Arrangement according to Claim 1, characterized in that the washing filter (4, 4') with its inlet chamber (9) is connected in each case additionally in the secondary flow direct to the primary pulper.

3. Arrangement according to Claim 1 or 2, characterized in that the circulating impeller (7) of the washing filter (4) is arranged coaxially to the circulating chamber (5) and inlet chamber (9).

4. Arrangement according to one of Claims 1 to 3, characterized in that the diameter of the inlet chamber (9) is 40-70 % smaller than the diameter of the circulating chamber (5) of the washing filter (4).

5. Arrangement according to one of Claims 1 to 4, characterized in that the circulating chamber (5) of the washing filter (4) is much smaller than the circulating chamber (13) of the secondary pulper (2).

6. Arrangement according to one of Claims 1 to 5, characterized in that the circulating chamber (5) of the washing filter (4) is formed as a short, compact hollow cylinder, with the ratio of its width b to its diameter D being 0.15 to 0.35.

7. Arrangement according to one of Claims 1 to 6, characterized in that one of the two connecting pipes (14, 23) of the inlet chamber (9) of the washing filter (4) is connected tangentially and the other centrally, to the latter at the end face.

8. Arrangement according to one of Claims 1 to 7, characterized in that the discharge pipe (52) for the fraction enriched with heavy contaminants drawn off the secondary pulper (2) is connected to the inlet chamber (9) of the washing filter (4).

## Revendications

1. Installation de traitement des papiers recyclés, comprenant un broyeur primaire (1, 1'), un hydrocyclone (40, 63) et, éventuellement, un broyeur secondaire (2) qui se présente sous forme d'une chambre de circulation (13) séparée par un tamis (11) d'une chambre pour la pâte à papier finie (10), une conduite d'évacuation (18) se trouvant au milieu et sur le côté frontal de la chambre de circulation (13), pour une fraction enrichie de déchets légers, et pourvue sur son périmètre d'une conduite (41) pour évacuer une suspension de fibres enrichie de déchets lourds, caractérisée par le fait qu'il est prévu un filtre de lavage (4, 4') qui consiste en une chambre de circulation (5) réalisée comme un cylindre compact, en une chambre (6) pour la pâte à papier finie, séparée de la chambre de circulation (5) par un tamis (8) en principe plat, devant lequel a été installée une roue de circulation (7) dans la chambre de circulation (5), ainsi qu'en une chambre d'entrée (9) pour la suspension de fibres et l'eau de lavage, la chambre d'entrée (9) présentant un diamètre sensiblement plus petit que celui de la chambre de circulation (5) et un raccordement (19, 19') pour l'eau de lavage, par le fait que la chambre d'entrée (9) du filtre de lavage (4, 4') est reliée au broyeur primaire (1) dans le courant principal à l'aide d'un hydrocyclone (63) ou à la conduite d'évacuation (18) dans le courant secondaire, en ce qui concerne la fraction avec des déchets légers du broyeur secondaire (2) placé en aval du broyeur primaire, par le fait qu'une conduite d'évacuation pour les déchets (20) part de la chambre de circulation (5) du filtre de lavage (4), un épaississeur (dispositif de triage à tambour 36, 64) étant joint à la conduite (20) d'évacuation du détritus dont le tuyau pour le filtrat est dirigé vers le broyeur primaire (1, 1).

2. Installation selon la revendication 1, caractérisée par le fait que le filtre de lavage (4, 4') avec sa chambre d'entrée (9) est chaque fois relié en supplément au broyeur primaire (1) dans le courant secondaire.

3. Installation selon l'une quelconque des revendications 1 ou 2, caractérisée par le fait que la roue de circulation (7) du filtre de lavage (4) est disposée de façon co-axiale par rapport à la chambre de circulation (5) et à la chambre d'entrée (9).

4. Installation selon l'une quelconque des revendications 1 à 3, caractérisée par le fait que le diamètre de la chambre d'entrée (9) est de 40 à 70 % plus petit que le diamètre de la chambre de circulation (5) du filtre de lavage.

5. Installation selon l'une quelconque des revendications 1 à 4, caractérisée par le fait que la chambre de circulation (5) du filtre de lavage (4) est beaucoup plus petite que la chambre de circulation (13) du broyeur secondaire (2).

6. Installation selon l'une quelconque des revendications 1 à 5, caractérisée par le fait que la chambre de circulation (5) du filtre de lavage (4) a été réalisée en cylindre creux, court et compact, le rapport de sa largeur b à son diamètre D étant comprise entre 0,15 et 0,35.

7. Installation selon l'une quelconque des revendications 1 à 6, caractérisée par le fait qu'une des deux conduites de raccordement (14, 23) de la chambre d'entrée (9) du filtre de lavage (4) a été reliée de façon tangentielle et l'autre au milieu du côté frontal de cette chambre d'entrée.

8. Installation selon l'une quelconque des revendications 1 à 7, caractérisée par le fait qu'une conduite d'évacuation (52) pour la fraction extraite du broyeur secondaire (2) enrichie de déchets lourds, est reliée à la chambre d'entrée (9) du filtre de lavage (4).

*Fig. 1*

Fig.2

0 147 564

FIG.3